# EUROPEAN PATENT SPECIFICATION

(11) **EP 3 753 199 B1**
(45) Date of publication and mention of the grant of the patent: **13.05.2026**
(21) Application number: 19702637.0
(22) Date of filing: 08.02.2019
(51) Int. Cl.: H04L 9/00, H04L 9/32

(54) **METHOD AND DEVICES FOR KEYLESS SECURE DATA COMMUNICATION**
VERFAHREN UND VORRICHTUNGEN ZUR SCHLÜSSELLOSEN SICHEREN DATENÜBERTRAGUNG
PROCÉDÉ ET DISPOSITIFS POUR COMMUNICATION DE DONNÉES SÉCURISÉE SANS CLÉ

(30) Priority: 12.02.2018 LU 100700
(43) Date of publication of application: 23.12.2020
(73) Proprietor: POST Luxembourg, 1616 Luxembourg (LU)
(72) Inventor: OURDANE, Mohammed, Arezki, 57130 Ars-sur-Moselle (FR); NGUYEN, Duy Cu, 4113 Esch-sur-Alzette (LU)
(74) Representative: Office Freylinger
(86) International application number: PCT/EP2019/053093
(87) International publication number: WO 2019/154966

(56) References cited:
- WO-A1-2018/012871
- JP-A- 2017 098 806
- US-A1- 2017 359 288

## Description

### TECHNICAL FIELD

The present invention generally relates to data communication, e.g. electronic messaging, over a network, and more particularly to a method and devices for secure and/or verifiable data communication without the use of cryptographic keys and encryption infrastructure.

### BACKGROUND

Electronic communication - from one user's (i.e., sender's) computing machine or device to another's (i.e., recipient's) device, for example through the use of mail application programs (such as Lotus/IBM Notes, Eudora, Outlook and Thunderbird) - has been widespread for some decades, and persons skilled in the art will be familiar with email communication protocols, especially the SMTP protocol and its extensions (https://tools.ietf.org/html/rfc5321).

Such email communications are conveyed by gateways, servers, routers, etc., forming the physical infrastructure for the transport of emails via the relevant protocols, from the sender's device to the recipient's device, and the email communication is handled by mail handling software or agents (hereafter "Mail Transport Agents", MTAs) on such servers or other infrastructure objects. At least to an extent, the contents of emails can be accessed at such infrastructure objects or by the MTAs, in particular where there is no end-to-end encryption of the email.

Therefore, privacy and interception and accessing of emails by unauthorized persons has been an issue for some time, with various mechanisms being developed in order to afford privacy through encryption and the use of an encryption key-based infrastructure. Examples of these include technologies such as public key infrastructure (PKI), and more particularly PGP, S/MIME, Gpg4Win, as well as various desktop computing encryption/signing applications, such as Symantec Encryption Desktop and Endpoint Security.

Moreover, numerous scenarios arise with the use of email in which a recipient needs to know that the content of a received message can be trusted (and, often, that the received message originated with the sender). That is, taking a digital signature for a message from the sender is as a cryptographic value that depends on the message and on the sender, the digital signature provides data integrity (and proof of origin - non-repudiation). This, as well as proof of existence of a message, can be desirable where it is necessary to settle disputes between the sender and recipient as to whether the message was sent or as to its content. For example, sender Alice is working at a law firm, and the recipient Bob is a freelancer. Alice wishes to send Bob a contract agreement by email, and they both wish to be able to prove the existence and integrity of the email, in case of disputes.

An issue with such known technologies is that it requires considerable investment and technology management in terms of key management; losing a private key may compromise all messages signed with this key. A further problem is that, in order to ensure communications such as emails are properly signed and conveyed to the recipient in a secure manner, some technical knowledge of encryption, signatures and certificates is required of the sending / receiving user(s), the setup can be technically burdensome, and significant intervention by the user at each time of sending an email may be required.

A further issue is that known systems do not always afford a suite of products that can be integrated with existing email infrastructures with negligible effort. An additional drawback is that known systems do not always also provide additional services such as secure storage, independent from email infrastructures, for signed communications.

US 2017/359288 A1 discloses an email messaging system that includes a first email message server, a second email message server and a distributed database system that stores a blockchain. The first email message server receives an email message from a first user system, and records a selected component of the received email message into a block of the blockchain. The selected component of the email message is added to the blockchain after validation by other participants in the blockchain. When the second email message server receives the email message from the first email message server, the second email message server can determine whether a component from the received email message matches the selected component that is stored in the block of the blockchain.

WO 2018/012871 A1 discloses a method for providing recording and verification service for data received and transmitted by messenger service. When at least one from among chat participants requests recording of data generated by the chat participants in an environment in which a messenger bot participates in a chat, registers at least a portion of the generated data as recorded data in a database, provides a transaction ID indicating location in the database of the data registered therein to at least one participant from among the chat participants, determines, in response to a recorded data-related verification request, whether input data included in the verification request corresponds to the recorded data, and, if the input data corresponds to the recorded data, then concludes the recorded data-related verification to have been successful.

### TECHNICAL PROBLEM

A problem addressed by the present invention is how to provide an effective method and devices for communication, in particular for creating and verifying digital signatures for electronic communications for establishing data integrity and proof of existence of a message, without requiring the use of cryptographic keys and while ensuring long-term signature validity. There is also a need for such arrangements that need little or no intervention from the end-user. The present invention seeks to address these and other problems, and to provide improved methods and devices for keyless secure data communication.

### SUMMARY OF THE INVENTION

In order to overcome the abovementioned problems, the present invention provides a method carried out at a sending mail server for secure communication of data from a sender device to a recipient device, the sending mail server including a memory device a processor, the processor being configured for carrying out the method. The method comprises, at a secure data transfer agent of the sending mail server, receiving source data to be communicated to the recipient device from the sender device, the source data having been determined by a source data application at the sender device, and invoking a rendering and signing module with the source data as a parameter. The method is characterised by, at the rendering and signing module, parsing the source data to generate a human-perceptible version of the source data (M_{P}), the human-perceptible version being a file in a platform-independent document file format; and transmitting a hash of at least the human-perceptible version to a blockchain gateway, the blockchain gateway providing the hash(es) to a blockchain infrastructure for generating on the basis thereof a signature (S); and receiving the signature S and returning the signature S in conjunction with the human-perceptible version (M_{P}) of the source data to the secure data transfer agent. The method further comprises, at the secure data transfer agent, sending the signed data (M_{S}) including the signature (S) and the human-perceptible (M_{P}) to the recipient device; and optionally making the signature (S) accessible to a secure signature portal.

Preferably, the method further includes uploading the signed data (M_{S}) to a secure cloud storage server via a first encrypted link.

In one embodiment, the secure data transfer agent (ks-MTA) is located on an external secure data transfer server remote from the sending device and coupled thereto via a second encrypted link, the secure data transfer agent (ks-MTA) being configured for message passing with the source data application via the second encrypted link.

In one embodiment, the source data application (MUA) is a mail application, and the source data is an electronic message. Preferably, the human-perceptible version comprises a printing-ready copy of the electronic message. Preferably, the printing-ready copy is in Portable Document Format (PDF) or Post Script (PS) format.

In another embodiment, the source data application is a content publishing application, and the source data is a media content.

In another embodiment, the source data application is a media presentation or streaming application, and the source data is image and/or video data.

In a further embodiment, the source data comprises content and metadata, for example metadata such as values from "From:", "To:" fields of the message.

At least in embodiments, "source data" adheres to the Internet Message Format (defined in RFC2821, RFC2822, RFC2045, RFC2046, RFC2047, RFC2048, RFC2049). A message is composed of an envelope and contents. The envelope contains metadata describing the contents of the message and any information needed to accomplish transmission and delivery.

In an embodiment, to the envelope of a message are added the following information:
- a blockchain-based signature reference that enables integrity and existence verification of the message.
- metadata information about the authentication method used to identify the sender and about the sender himself (full name, official address) if such information is available to the authentication method.

It is to be noted that, before signing a message, the techniques according to embodiments of invention renders its content and relevant metadata, including sender identity and authentication method, recipient email address, time of signing into a platform-independent document file format, such as Portable Document Format (PDF). One message is rendered into one file in the platform-independent document file format, in this example, one PDF file. This platform-independent document format file is signed using the blockchain infrastructure through the Blockchain Gateway. Attachments that come with the message, if any, may also be signed using the same blockchain. Each attachment gives rise to an additional signature that is referred to in the platform-independent document.

For the present purposes, it is assumed that the sender is trusted. It will be appreciated that, in embodiments, the sender is authenticated by suitable means. That is, the data integrity and proof of existence of a message, the aforementioned methods only guarantee data integrity and proof of existence of a message, i.e. that a message originates from a ks-MUA (i.e., an email client). For proof of origin, the methods require an additional technology for authentication.

In embodiments, the disclosed methods rely on existing technologies such as eID (electronic ID) or multi-factor authentication to authenticate the sender. In embodiments, authentication can be implemented in or integrated into ks-MUA and ks-MTA. In the present context, the role of authentication is to make sure that the sender is the person who owns the sending email address, i.e., binding a person to the email address. This can be done using username/password and additional challenges (e.g., SMS) or using an electronic identity to an extent.

In a further embodiment, authentication is initiated by the sender's ks-MUA and verified by his ks-MTA. If the ks-MUA is not present, any MUA that the sender is using can also initiate the authentication procedure.

The present invention also provides a method for processing at a recipient device signed data (M'_{S}) sent by a sender device using the method of any of claims 1 to 8 of the appended claims, the recipient device including a memory device, audio and/or visual output devices and a user input device coupled to a processor, the processor being configured for carrying out the method. The method is characterised by: receiving at a recipient data application or at a recipient server communicating with the recipient data application, the signed data (M'_{S}); extracting a signature (S') from the signed data (M'_{S}); sending the extracted signature (S') to a blockchain gateway and/or to a secure signature portal with a request for verification; receiving a verification result from the blockchain gateway or the secure signature portal, the verification result indicating whether or not the extracted signature (S') is verified as corresponding to a signature associated with the signed data and sent to the blockchain gateway or secure signature portal by the sender device; and forwarding the verification result to the recipient data application or the recipient server; at the recipient data application or the recipient server, extracting the human-perceptible version of the message (M'_{P}) and the signature (S') from the signed data (M'_{S}), presenting the human-perceptible version M'_{P} to a user via the audio and/or visual output devices, and/or presenting an indication in association with the received signed data M'_{S} that the verification result was positive or negative corresponding, respectively, to the extracted signature (S') being valid or invalid.

Also disclosed herein is a method carried out at a sender device, for secure communication of source data to a recipient device, the sender device including a memory device, audio and/or visual output devices and a user input device coupled to a processor, the method being carried out by the processor. The method comprises: at a source data application, determining source data to be communicated to the recipient device, and conveying the source data to a secure data transfer agent of a sending mail server as defined in any of claims 1 to 9 of the appended claims.

Also disclosed herein is a sending mail server for secure communication of data from a sender device to a recipient device, the sending mail server including a memory device and a processor, the processor being configured for carrying out the method of any of claims 1 to 8 of the appended claims.

According to another aspect of the invention there is provided a recipient device for secure receipt of data communicated by a sender device, the recipient device including a memory device, audio and/or visual output devices and a user input device coupled to a processor, the processor being configured for carrying out the method of claim 9 of the appended claims.

Advantages, at least in embodiments, thus include the following: (i) leveraging current email infrastructure, making it easy to deploy and use (with minimal or no end-user involvement); (ii) rendering email content to make it printing-ready, saving time/processing at the destination and making it possible to have email-independent storage of email content; (iii) signing rendered messages with a blockchain without the need of having cryptographic keys; (iv) providing message signing notification; (v) enabling independent signature verification; (vi) providing long-term signature validity and verification; and (vii) providing delivery and read proofs.

Advantages of the embodiments herein in sending signed messages to the recipient are that
- he/she can verify the integrity of the messages,
- in case of dispute, he can prove the existence of the messages, and
- the signature enables trust establishment between the sender and the recipient.

### BRIEF DESCRIPTION OF THE DRAWINGS

The present invention will be more apparent from the following description of several non-limiting embodiments with reference to the attached drawings, wherein
Figure 1 schematically illustrates a communication system including a sender device, recipient device and intermediate infrastructure according to an embodiment of the invention; and
Figure 2 is a message flow diagram showing message flows in the case of a sending an email without using ks-MUA;
Figure 3 is a message flow diagram showing message flows in the case of a sending an email using ks-MUA;
Figure 4 is a message flow diagram showing message flows in the case of retrieving signature notification;
Figure 5 is a message flow diagram showing message flows in the case of a sender retrieving his own messages;
Figure 6 is a message flow diagram showing message flows in the case of a recipient retrieving signed messages without using ks-MUA;
Figure 7 is a message flow diagram showing message flows in the case of a recipient retrieving signed messages using ks-MUA;
Figure 8 is a message flow diagram showing message flows in the case of a recipient retrieving signed messages using ks-MUA and sending a read notification; and
Figure 9 is a message flow diagram showing message flows in the case of independent signature verification.

### DETAILED DESCRIPTION OF EMBODIMENTS

In the following and the drawings, like numerals will be used to indicate like elements.

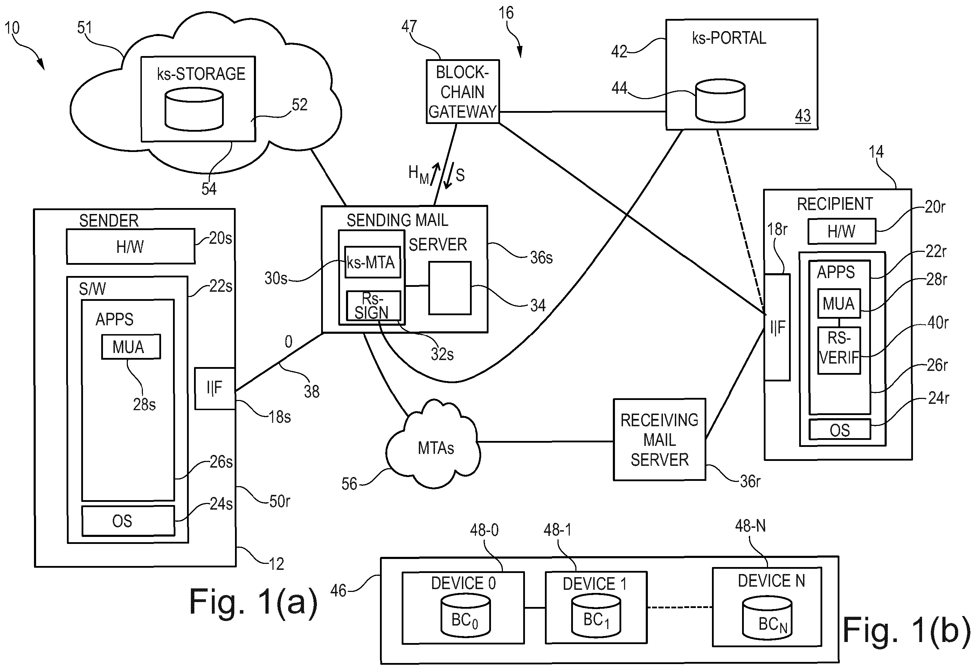

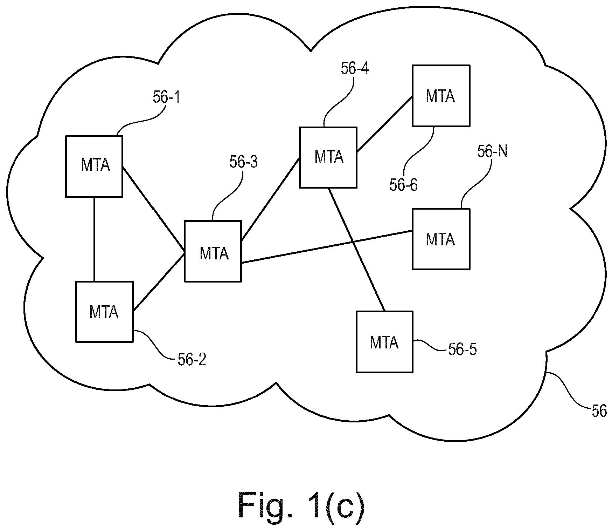

Figure 1 schematically illustrates a communication system 10 including a sender device 12, recipient device 14 and intermediate infrastructure generally designated 16, according to an embodiment of the invention.

Each of the sender device 12 and recipient device 14 may comprise a personal computer, laptop or tablet computer, smartphone or other wired or wireless, portable or fixed, computing device, the construction and functioning of which are well known to persons skilled in the art.

The sender device 12 comprises a communications interface 18s, which may be a wired network of wireless interface, as well as other hardware 20s (generally designated) as is well known to persons skilled in the art, depending on the type of sender device 12; and the details of such hardware will not be elaborated in detail here, for brevity.

In a (non-volatile) memory device (not shown) of hardware 20s of the sender device 12 are stored programs 22s, including operating system software 24s and application software 26s. The latter includes, in this embodiment, a mail program, also referred to herein as Mail User Agent, MUA, 28s. The MUA 28s is configured, in use, for interaction and/or message passing with, and/or invocation of, a secure data transfer agent (ks-MTA) 30s located at a sending mail server 36s, including server hardware 34 (generally designated) as is well known to persons skilled in the art, used by the sender device 12, through secured communication via an encrypted link 38. In one implementation, the MUA 28s is in the form of a dedicated MUA (ks-MUA; not shown) configured for operation within the system in conjunction with other components/modules (see below), e.g. deployed on sender device 12 for extended authentication purposes.

The secure data transfer agent (ks-MTA) 30s is in turn configured, in use, for interaction and/or message passing with, and/or invocation of, a rendering and signing module (ks-Sign) 32 at sending mail server 36s, as will be described in further detail below.

Similarly, the recipient device 14 comprises a communications interface 18r, which may be a wired network of wireless interface, as well as other hardware 20r (generally designated) as is well known to persons skilled in the art, depending on the type of recipient device 14; and the details of such hardware will not be elaborated in detail here, for brevity.

Further similarly, in a (non-volatile) memory device (not shown) of hardware 20r of the recipient device 14 are stored programs 22r, including operating system software 24r and application software 26r. The latter includes, in this embodiment a MUA. In one implementation, the MUA is in the form of a dedicated MUA, namely ks-MUA 28r, configured for operation within the system in conjunction with other components / modules (see below), e.g. deployed on recipient device 14 for verification purposes, as will be described in detail hereinafter. (It will be appreciated that the MUA 28r may be made up of a single software entity, or multiple software entities.)

The intermediate infrastructure 16 includes a server-implemented signature verification portal (ks-Portal) 42, in this embodiment illustrated as a second server 43 having a signature database 44 storing signatures {S} associated with emails, e.g. in embodiments each signature in association with a unique ID of the sender device 12 or in association with the unique ID of the sender device 12 and a unique ID of the recipient device 14.

In a preferred embodiment, only ks-MTA 30s is required to be in the trusted zone of the sender. In addition, ks-MTA 30s, ks-Sign 32s and ks-Portal 42 must also trust one another. However, as the sender has no direct link to ks-Sign 32s, their trust establishment is not necessary.

The MUA 28r is configured, in use, for interaction and/or message passing with, and/or invocation of, a verification mechanism (not shown), in this embodiment located on signature verification portal (ks-Portal) 42, as will be described in further detail below.

The intermediate infrastructure 16 further includes a blockchain gateway 47 providing access to and interaction with a blockchain infrastructure 46 (see Fig. 1b) comprising one or multiple, distributed devices 48-0, 48-1...48-N, for example in the form of third servers or user devices, each storing a respective copy, BC0, BC1....BCN, of the blockchain database, respectively labelled 50-0, 50-1...50-N, and accessible via a blockchain gateway 47.

Optionally, the intermediate infrastructure 16 includes a server-implemented cloud storage facility ("ks-STORAGE") 51, in this embodiment illustrated as a fourth server 52 having a communications database 54 storing email communications sent by devices, e.g. each in association with a unique ID of the sender device 12 and/or in association with a unique ID of the recipient device 14.

Finally, for communication over the network, intermediate infrastructure 16 includes access points, gateways, routers, servers, etc., referred to herein as Mail Transfer Agents (MTAs). In the embodiment illustrated, the MTAs, collectively designated 56, comprise MTAs 56-1, 56-2,...56-N (see Fig. 1c). In use, sender device 12 communicates with recipient device 14 for example via MTAs 56-2, 56-3 and 56-N. In addition, sender device 12 communicates with signature verification portal 42 for example via MTAs 56-1, 56-3 and 56-4. Further, sender device 12 may communicate with devices 48-0, 48-1...48-N of blockchain infrastructure 46 for example via MTAs 56-2 to 56-5.

The operation of the communication system 10 of Fig. 1 will be described in the context of email communication for the purpose of illustration, but the principles and software/hardware products described herein can be extended to other electronic exchanges, e.g., content and media publishing, notarization.

Email communication involves multiple parties: the sender device 12, one or more recipient devices 14, and the mail handling service composed of the MTAs 56. The sender at sender device 12 uses the MUA 28s (mail client, such as Outlook) to compose and send a message M. It is, then, the mail handling service's (including MTAs 56) turn to deliver the message M to the recipient device 14.

As noted, a dedicated MTA (i.e. ks-MTA 30s) is deployed within the trusted zone of the sender device 12 (on mail server 36s) and able to establish a secure link with the sender device's 12 MUA 28s.

In use, the operation of the communication system 10 is typically as follows.

The sender sends a message M using MUA (email client) 28s on sender device 12.

Then, the secure data transfer agent (ks-MTA) 30s receives the message M and invokes rendering and signing module (ks-Sign) 32 for rendering and signing the message M, thus creating signed message M_{S}. In one implementation, by default, all messages handled by the secure data transfer agent (ks-MTA) 30s are signed. However, the sender can also opt to sign or not by indicating a special flag in the email subject.

The rendering and signing module (ks-Sign) 32 renders (parses) the message M (except its attachments) to generate a printing-ready (human-perceptible) copy M_{P} of it, for example in Portable Document Format (PDF) or PostScript (PS). According to embodiments, the message is rendered in a format that is independent of application software, hardware, and operating systems.

The rendering and signing module (ks-Sign) 32 then signs the rendered message M_{P} with the help from the third-party blockchain infrastructure 46, generating signed message M_{S}. In an embodiment, the signing flow consists of the following steps:
- ks-MTA computes the hashes H_{M} of attachments (if any) and of the human-perceptible version of the message and submits them to the blockchain gateway 47;
- the blockchain gateway 47 registers/attaches an official timestamp, obtained from a trusted source, with the hashes and registers them with the blockchain;
- the blockchain gateway 47 returns to the ks-MTA 30s via the rendering and signing module ks-Sign 32 a unique signature reference (S) for the message M.
- the secure data transfer agent ks-MTA attaches the signature reference S and the human-perceptible version M_{P} into the message being sent to the recipient and to the notification being sent to the sender.

The signature reference (S) is preferably appended into the header/metadata of the "signed" message Mₛ sent to the recipient, so he/she receives the signature reference S upon the arrival of the message Mₛ. No additional action is need to obtain S. (As used herein, signature and signature reference are used interchangeably.)

The rendering and signing module (ks-Sign) 32 also makes signatures S available to the signature verification portal 42. The recipient or anybody who obtains S can verify the validity of the signature through signature verification portal (ks-Portal) 42.

Signed and printing-ready messages M_{S} can be kept with (i.e., uploaded to) cloud storage facility (ks-Storage) 51 in the cloud.

The secure data transfer agent (ks-MTA) 20s transmits the signed message M_{S} via communications interface 18s and delivers it to subsequent MTAs 56 before it reaches the intended recipient device 14.

At the recipient device 14, upon receipt of the signed message M_{S} from a receiving mail server 36r, the recipient device's 14 ks-MUA 28r, extracts the signature S'.

In one embodiment, ks-MUA 28r then sends the extracted signature S' and sends it as a query to the blockchain gateway 47 for verification. In another embodiment, ks-MUA 28r may send the extracted signature S' as a query to the signature verification portal 42 for verification.

At the recipient data application (ks-MUA) 28r, the message M along with its rendered human-perceptible version M_{P} are presented to a user of the recipient device 14 via audio and/or visual output devices. Further, a verification result returned from the signature verification portal 42 using the extracted signature (S') is preferably also presented to the user, or available by suitable icon/menu section.

In embodiments, in addition to the above main operations, additional branching flows may be included for signing, delivery, and read proof notification.

In the following, the above techniques will be illustrated with regard to particular scenarios.

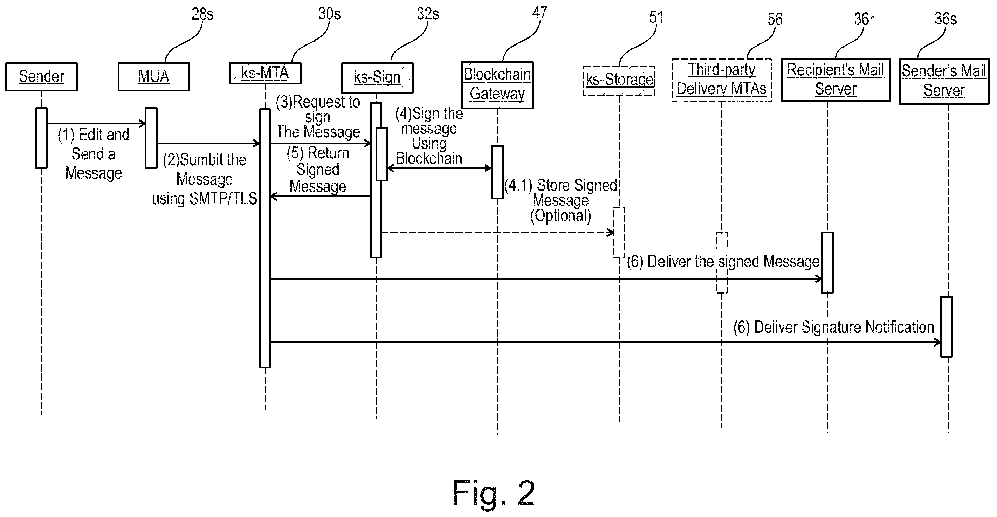

The Figure 2 is a message flow diagram showing message flows in the case of a sending an email without using ks-MUA. Initially, the sender composes/edits a message M and initiates a send at the MUA 28s (step 1). The MUA 28s then submits the message M to the ks-MTA 30s using SMTP/TLS protocols (step 2). Next, at step 3, ks-MTA 30s sends a request to ks-Sign 32s for the message M to be signed. The module ks-Sign 32s then interacts with the blockchain infrastructure 46 as described above (including sending the hash(es) to the blockchain gateway 47), in order to obtain the signature (reference) S at step 4. (Optionally, ks-Sign 32s sends the signed message Mₛ to the cloud storage facility (ks-Storage) 51 for email-independent storage.)

At step 5, ks-Sign 32s returns the signed message Ms to ks-MTA 30s. Next, at step 6, the signed message Mₛ is attached into the original message M before both are delivered to the recipient's email server 36r (via MTAs 56).

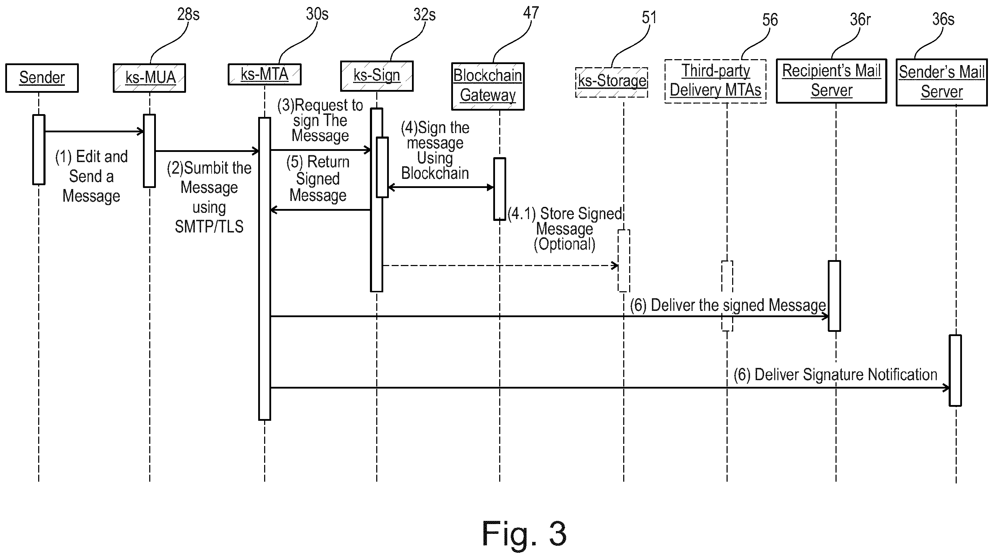

Figure 3 is a message flow diagram showing message flows in the case of a sending an email using ks-MUA 28s. Initially, the sender composes/edits a message M and initiates a send at the ks-MUA 28s (step 1). (Here, ks-MUA 28s may invoke challenges/user input requests and routines to authenticate the sender.)

The MUA 28s then submits the message M to the ks-MTA 30s using SMTP/TLS protocols (step 2). Next, at step 3, ks-MTA 30s sends a request to ks-sign 32s for the message M to be signed. The module ks-Sign 32s then interacts with the blockchain infrastructure 46 as described above (including sending the hash(es) to the blockchain gateway 47), in order to obtain the signature (reference) S at step 4.

At step 5, ks-Sign 32s returns the signed message Ms to ks-MTA 30s. Next, at step 6, the signed message Mₛ is attached into the original message M before both are delivered to the recipient's email server 36r (via MTAs 56).

Compared to the scenario (Fig. 2) without ks-MUA, the scenario allows the sender to choose either to sign or not sign an outgoing message.

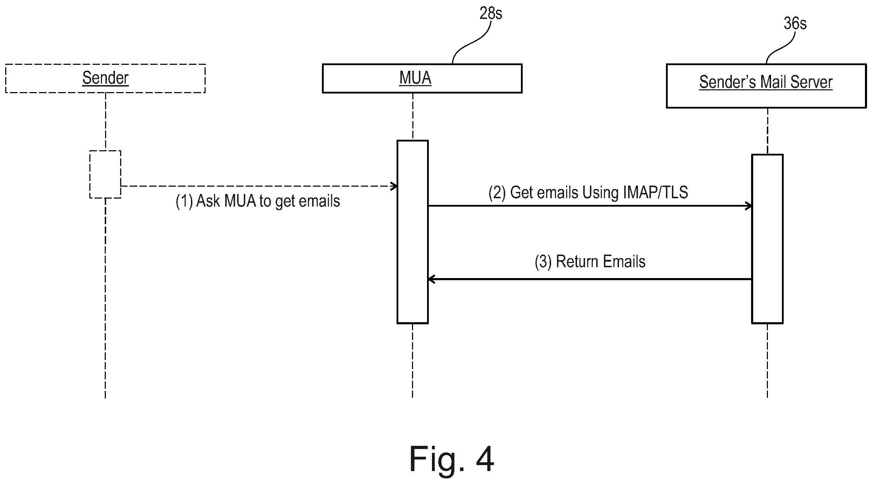

Figure 4 is a message flow diagram showing message flows in the case of retrieving signature notification. Initially, the sender may enter a user input (e.g. at a user interface of sender device 12) asking the MUA 28s thereof to get messages (from the sender's email server 36s) (step 1). Then, at step 2, the MUA 28s submits a request to the sender's mail server 36s using IMAP/TLS to fetch emails. At step 3, the sender's mail server 36s returns emails to the MUA 28s.

The procedure of Fig. 4 is similar to checking email that device users do every day. Among the emails returned by the sender's email server 36s there are included signature notification messages of previously sent messages. It will be appreciated that the sender and step 1 are optional as the MUA 28s can trigger automatically the action of getting emails.

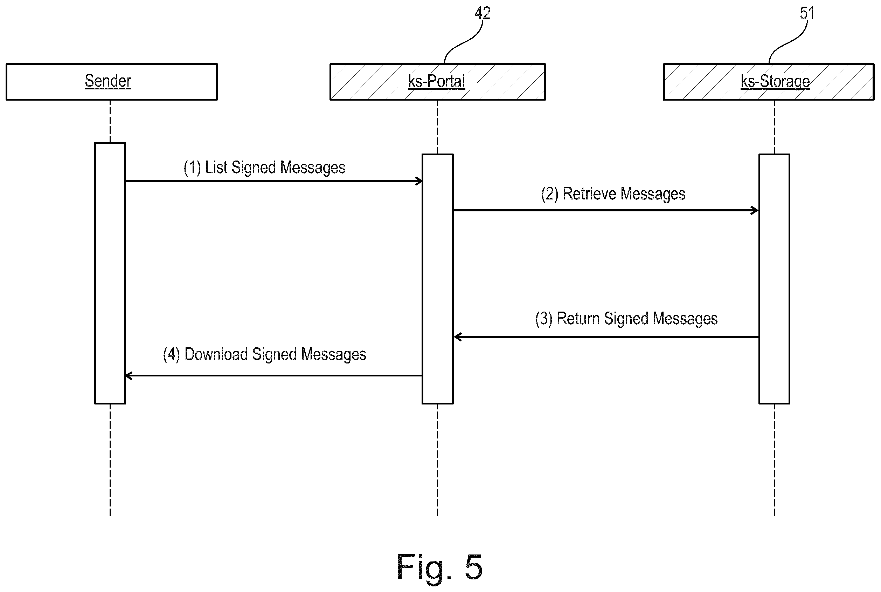

Figure 5 is a message flow diagram showing message flows in the case of a sender retrieving his own messages. At step 1, the sender (sender device 12) sends a request to the verification portal (ks-Portal) 42 including a list of emails. The ks-Portal 42 then sends a request to the cloud storage facility (ks-Storage) 51 to retrieve the listed emails (step 2). Next, at step 3, the signed messages Mₛ are returned by ks-Storage 51 to the ks-Portal 42. Finally, the signed messages Mₛ are downloaded by the sender device 12 from the ks-Portal 42. Note that the ks-Portal 42 preferably in practice carries out necessary controls to authorize any retrieving request; however, such authorization process is not included in Fig. 5 for brevity.

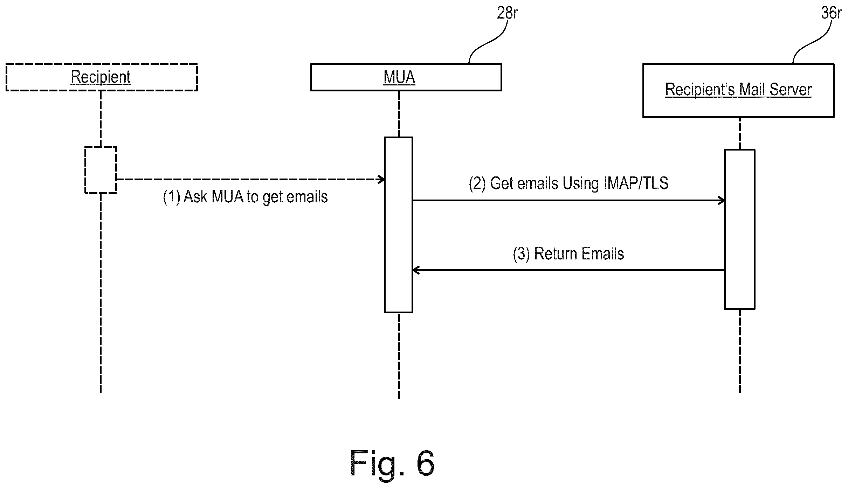

Figure 6 is a message flow diagram showing message flows in the case of a recipient retrieving signed messages without using ks-MUA. Initially, the recipient may enter a user input (e.g. at a user interface of recipient device 14) asking the MUA 28r thereof to get messages (from the recipient's email server 36r) (step 1). Then, at step 2, the MUA 28r submits a request to the recipient's mail server 36r using IMAP/TLS to fetch emails. At step 3, the recipient's mail server 36r returns emails to the MUA 28r.

The procedure of Fig. 6 is similar to checking email that device users do every day. Among the emails returned by the sender's email server 36s there are included signed messages, of which signatures can be verified independently through ks-Portal.

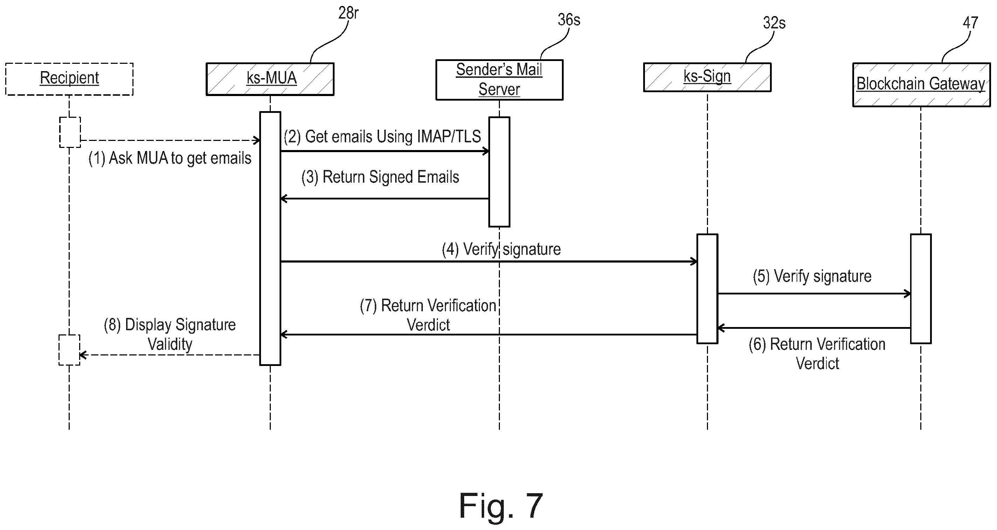

Figure 7 is a message flow diagram showing message flows in the case of a recipient retrieving signed messages using ks-MUA. Initially, the recipient may enter a user input (e.g. at a user interface of recipient device 14) asking the ks-MUA 28r thereof to get messages (from the sender's email server 36s) (step 1). Then, at step 2, the ks-MUA 28r submits a request to the sender's mail server 36s using IMAP/TLS to fetch emails. At step 3, the sender's mail server 36s returns signed emails to the MUA 28r.

Next, at step 4, the ks-MUA 28r submits a request to ks-Sign 32s to verify the signature(s) of the signed email(s). The module ks-Sign 32s invokes the blockchain gateway 47 at step 5 to verify the signature, and the verification verdict is returned by the blockchain gateway 47 to ks-Sign 32s at step 6. Then, the verification verdict is returned by ks-Sign 32s to the ks-MUA 28r of recipient device 14 at step 7. Finally, the receipt of the verification verdict by the ks-MUA 28r of recipient device 14 results in the display (step 8) to the recipient of an indication of whether the signature is valid or not, for each received signed message.

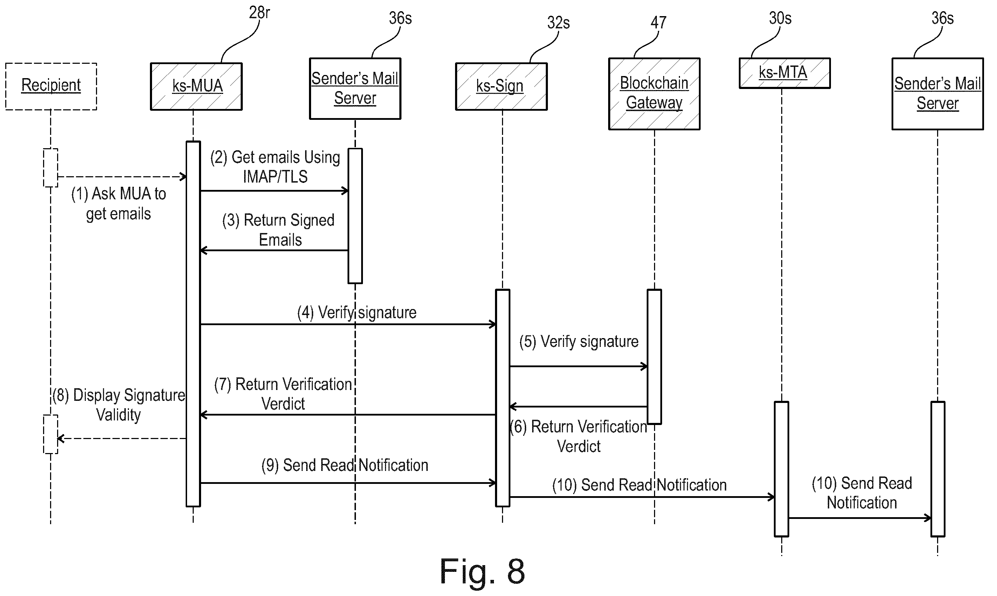

Figure 8 is a message flow diagram showing message flows in the case of a recipient retrieving signed messages using ks-MUA 28r and sending a read notification. The process of Fig. 8 is the same as that for Fig. 7, up to and including step 8. Thereafter, ks-MUA 28r of recipient device 14 sends a read notification to ks-Sign 32s (step 9), and this is forwarded in turn from ks-Sign 32s to ks-MTA 30s at step 10. Finally, the read notification is transmitted from ks-MTA 30s to the sender's mail server 36s at step 11.

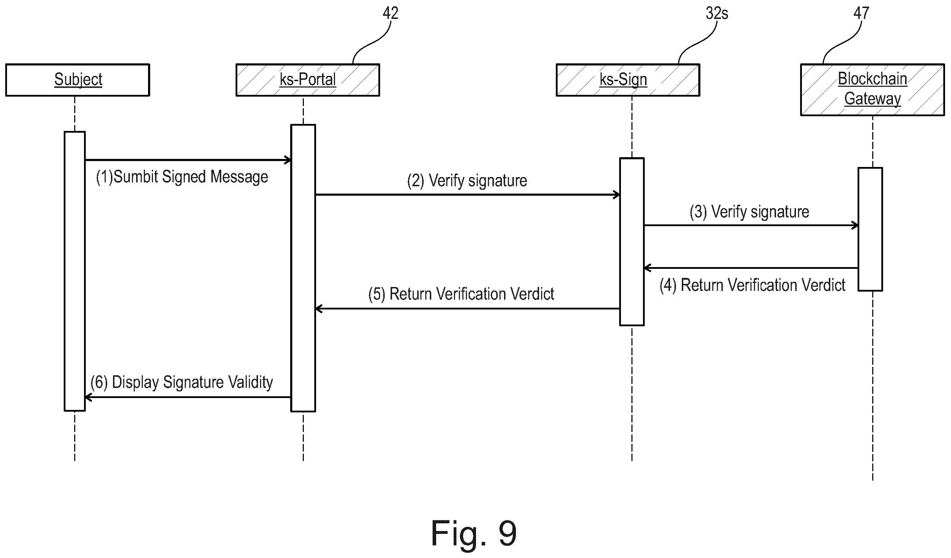

Figure 9 is a message flow diagram showing message flows in the case of independent signature verification. First, at step 1, a device used by a subject (independent user, whether a sender, recipient or non-involved) submits a signed message Mₛ to ks-Portal 42. Using the signature (reference) S extracted, ks-Portal 42 submits a request to ks-Sign 32s to verify the signature S of the signed email at step 2. The module ks-Sign 32s invokes the blockchain gateway 47 at step 3 to verify the signature, and the verification verdict is returned by the blockchain gateway 47 to ks-Sign 32s at step 4. Then, the verification verdict is returned by ks-Sign 32s to the ks-Portal 42 at step 5. Finally, the receipt of the verification verdict from the ks-Portal 42 by the subject's device results in the display (step 6) to the subject of an indication of whether the signature is valid or not, for the received signed message.

### List of reference signs

- 10: communication system
- 12: sender device
- 14: recipient device
- 16: intermediate infrastructure
- 18r: communications interface
- 18s: communications interface
- 20r: hardware
- 20s: hardware
- 22r: program
- 22s: program
- 24r: operating system software
- 24s: operating system software
- 26r: application software
- 26s: application software
- 28r: Mail User Agent, ks-MUA
- 28s: Mail User Agent, MUA
- 30s: secure data transfer agent (ks-MTA)
- 32: rendering and signing module (ks-Sign)
- 34: server hardware
- 36s: sending mail server
- 36r: receiving mail server
- 37: first encrypted link
- 38: second encrypted link
- 40r: verifier module (ks-Verifier)
- 42: signature verification portal
- 43: second server
- 44: signature database
- 46: blockchain infrastructure
- 47: blockchain gateway
- 48-0, 48-1...48N: distributed devices
- 50-0, 50-1...50N: blockchain database
- 51: cloud storage facility
- 52: fourth server
- 54: communications database
- 56: Mail Transfer Agents (MTAs)

## Claims

1. A method carried out at a sending mail server (36s) for secure communication of data from a sender device (12) to a recipient device (14), the sending mail server (36s) including a memory device and a processor, the processor being configured for carrying out the method, the method comprising:
at a secure data transfer agent (30s) of the sending mail server (36s),
receiving source data to be communicated to the recipient device (14) from the sender device (12), the source data having been determined by a source data application (28s) at the sender device (12), and
invoking a rendering and signing module (32) with the source data as a parameter;
at the rendering and signing module (32), said method comprises
parsing the source data to generate a human-perceptible version of the source data (M_{P}), the human-perceptible version being a file in a platform-independent document file format; and
transmitting a hash of at least the human-perceptible version to a blockchain gateway (47), the blockchain gateway (47) providing the hash(es) to a blockchain infrastructure (46) for generating on the basis thereof a signature S; and
receiving the signature S and returning the signature (S) in conjunction with the human-perceptible version (M_{P}) of the source data to the secure data transfer agent (30s);
at the secure data transfer agent (30s),
sending the signed data (M_{S}) including the signature (S) and the human-perceptible (M_{P}) to the recipient device (14); and
optionally making the signature (S) accessible to a secure signature portal (42).

2. The method according to claim 1, further including uploading the signed data (M_{S}) to a secure cloud storage server (51) via a first encrypted link (37).

3. The method according to claim 1 or 2, wherein the sending mail server (36s) remote from the sending device (12) and coupled thereto via a second encrypted link (38).

4. The method according to any of the preceding claims, wherein the source data application (28s) is a mail application, and the source data is an electronic message.

5. The method according to any of the preceding claims, wherein the human-perceptible version comprises a printing-ready copy of the electronic message.

6. The method according to claim 5, wherein the printing-ready copy is in Portable Document Format (PDF) or Post Script (PS) format.

7. The method according to any of claims 1 to 3, wherein the source data application (28s) is a content publishing application, and the source data is a media content.

8. The method according to any of claims 1 to 3, wherein the source data application (28s) is a media presentation or streaming application, and the source data is image and/or video data.

9. A method for processing at a recipient device (14) signed data (M'_{S}) sent by a sender device (12) using the method of any of the preceding claims, the recipient device (14) including a memory device, audio and/or visual output devices and a user input device coupled to a processor, the processor being configured for carrying out the method, the method comprises:
receiving at a recipient data application (28r) or at a recipient server communicating with the recipient data application (28r), the signed data (M'_{S});
extracting a signature (S') from the signed data (M'_{S});
sending the extracted signature (S') to a blockchain gateway (47) and/or to a secure signature portal (42) with a request for verification;
receiving a verification result from the blockchain gateway (47) or the secure signature portal (42), the verification result indicating whether or not the extracted signature (S') is verified as corresponding to a signature associated with the signed data and sent to the blockchain gateway (47) or secure signature portal (42) by the sender device (12); and
forwarding the verification result to the recipient data application (28r) or the recipient server;
at the recipient data application (28r) or the recipient server,
(i) extracting the human-perceptible version of the message (M'_{P}) and the signature (S') from the signed data (M'_{S}),
presenting the human-perceptible version M'_{P} to a user via the audio and/or visual output devices, and/or
(ii) presenting an indication in association with the received signed data M'_{S} that the verification result was positive or negative corresponding, respectively, to the extracted signature (S') being valid or invalid.

10. A recipient device (14) for secure receipt of data communicated by a sender device (12), the recipient device (14) including a memory device, audio and/or visual output devices and a user input device coupled to a processor, the processor being configured for carrying out the method of claim 9.

## Patentansprüche

1. Verfahren, das an einem sendenden Mailserver (36s) zur sicheren Kommunikation von Daten von einer Sendervorrichtung (12) zu einer Empfängervorrichtung (14) ausgeführt wird, wobei der sendende Mailserver (36s) eine Speichervorrichtung und einen Prozessor einschließt, wobei der Prozessor dafür konfiguriert ist, das Verfahren auszuführen, wobei das Verfahren Folgendes umfasst:
an einem sicheren Datentransferagenten (30s) des sendenden Mailservers (36s),
Empfangen von Quelldaten, die an die Empfängervorrichtung (14) zu kommunizieren sind, von der Sendervorrichtung (12), wobei die Quelldaten von einer Quelldatenanwendung (28s) an der Sendervorrichtung (12) bestimmt worden sind, und
Aufrufen eines Rendering- und Signiermoduls (32) mit den Quelldaten als Parameter;
wobei das Verfahren an dem Rendering- und Signiermodul (32) Folgendes umfasst:
Analysieren der Quelldaten, um eine für einen Menschen wahrnehmbare Version der Quelldaten (M_{P}) zu generieren, wobei es sich bei der für einen Menschen wahrnehmbaren Version um eine Datei in einem plattformunabhängigen Dokumentendateiformat handelt; und
Übertragen eines Hash zumindest von der für einen Menschen wahrnehmbaren Version an einen Blockchain-Netzübergang (47), wobei der Blockchain-Netzübergang (47) den Hash (die Hashs) für eine Blockchain-Infrastruktur (46) zum Generieren einer Signatur S auf dessen Grundlage bereitstellt; und
Empfangen der Signatur S und Rückgeben der Signatur (S) in Verbindung mit der für einen Menschen wahrnehmbaren Version (M_{P}) der Quelldaten an den sicheren Datentransferagenten (30s);
an dem sicheren Datentransferagenten (30s)
Senden der signierten Daten (M_{S}) einschließlich der Signatur (S) und der für einen Menschen wahrnehmbaren Version (M_{P}) an die Empfängervorrichtung (14); und
gegebenenfalls Gewähren eines Zugriffs auf die Signatur (S) durch ein sicheres Signaturportal (42).

2. Verfahren nach Anspruch 1, ferner einschließend das Hochladen der signierten Daten (M_{S}) auf einen sicheren Cloud-Speicherserver (51) über einen ersten verschlüsselten Link (37).

3. Verfahren nach Anspruch 1 oder 2, wobei der sendende Mailserver (36s) von der sendenden Vorrichtung (12) entfernt ist und über einen zweiten verschlüsselten Link (38) mit dieser gekoppelt ist.

4. Verfahren nach einem der vorhergehenden Ansprüche, wobei die Quelldatenanwendung (28s) eine Mailanwendung ist und es sich bei den Quelldaten um eine elektronische Nachricht handelt.

5. Verfahren nach einem der vorhergehenden Ansprüche, wobei die für einen Menschen wahrnehmbare Version eine druckfertige Kopie der elektronischen Nachricht umfasst.

6. Verfahren nach Anspruch 5, wobei die druckfertige Kopie in einem **PDF-**Format (Portable Document Format) oder einem PS-Format (Post Script) vorliegt.

7. Verfahren nach einem der Ansprüche 1 bis 3, wobei die Quelldatenanwendung (28s) eine Inhalteveröffentlichungsanwendung ist und es sich bei den Quelldaten um Medieninhalte handelt.

8. Verfahren nach einem der Ansprüche 1 bis 3, wobei die Quelldatenanwendung (28s) eine Medienpräsentations- oder Streaming-Anwendung ist und es sich bei den Quelldaten um Bild- und/oder Videodaten handelt.

9. Verfahren zum Verarbeiten, an einer Empfängervorrichtung (14), von signierten Daten (M'_{S}), die von einer Sendervorrichtung (12) gesendet wurden, unter Verwendung des Verfahrens nach einem der vorhergehenden Ansprüche, wobei die Empfängervorrichtung (14) eine Speichervorrichtung, akustische und/oder visuelle Ausgabevorrichtungen und eine Benutzereingabevorrichtung, die mit einem Prozessor gekoppelt ist, umfasst, wobei der Prozessor dafür konfiguriert ist, das Verfahren auszuführen, wobei das Verfahren Folgendes umfasst:
Empfangen, an einer Empfängerdatenanwendung (28r) oder an einem Empfängerserver, der mit der Empfängerdatenanwendung (28r) kommuniziert, der signierten Daten (M'_{S});
Extrahieren einer Signatur (S') von den signierten Daten (M'_{S});
Senden der extrahierten Signatur (S') an einen Blockchain-Netzübergang (47) und/oder an ein sicheres Signaturportal (42) mit einer Anfrage zur Verifizierung;
Empfangen eines Verifizierungsergebnisses von dem Blockchain-Netzübergang (47) oder dem sicheren Signaturportal (42), wobei das Verifizierungsergebnis angibt, ob die extrahierte Signatur (S') als einer Signatur entsprechend verifiziert wird, die mit den signierten Daten verknüpft ist, und von der Sendervorrichtung (12) an den Blockchain-Netzübergang (47) oder das sichere Signaturportal (42) gesendet wird; und
Weiterleiten des Verifizierungsergebnisses an die Empfängerdatenanwendung (28r) oder den Empfängerserver;
an der Empfängerdatenanwendung (28r) oder dem Empfängerserver,
(i) Extrahieren der für einen Menschen wahrnehmbaren Version der Nachricht (M'_{P}) und der Signatur (S') von den signierten Daten (M'_{S}), Präsentieren der für einen Menschen wahrnehmbaren Version M'_{P} für einen Benutzer über die akustische und/oder visuelle Ausgabevorrichtungen, und/oder
(ii) Präsentieren einer Angabe im Zusammenhang mit den empfangenen signierten Daten M'_{S}, dass das Verifizierungsergebnis positiv oder negativ war, jeweils der Tatsache entsprechend, dass die extrahierte Signatur (S') gültig oder ungültig war.

10. Empfängervorrichtung (14) zum sicheren Empfangen von Daten, die von einer Sendervorrichtung (12) kommuniziert worden sind, wobei die Empfängervorrichtung (14) eine Speichervorrichtung, akustische und/oder visuelle Ausgabevorrichtungen und eine Benutzereingabevorrichtung, die mit einem Prozessor gekoppelt ist, umfasst, wobei der Prozessor dafür konfiguriert ist, das Verfahren nach Anspruch 9 auszuführen.

## Revendications

1. Procédé mis en œuvre au niveau d'un serveur de messagerie expéditeur (36s) pour une communication sécurisée de données d'un dispositif expéditeur (12) à un dispositif destinataire (14), le serveur de messagerie expéditeur (36s) incluant un dispositif mémoire et un processeur, le processeur étant configuré pour la mise en œuvre du procédé, le procédé comprenant :
au niveau d'un agent de transfert sécurisé de données (30s) du serveur de messagerie expéditeur (36s),
la réception de données sources à communiquer au dispositif destinataire (14) en provenance du dispositif expéditeur (12), les données sources ayant été déterminées par une application de données sources (28s) au niveau du dispositif expéditeur (12), et
l'appel d'un module de restitution et de signature (32) avec les données sources comme paramètre ;
au niveau du module de restitution et de signature (32), ledit procédé comprend
l'analyse des données sources pour générer une version perceptible par un être humain des données sources (M_{P}), la version perceptible par un être humain étant un fichier dans un format de fichier de document indépendant de la plateforme ; et
l'émission d'un hachage d'au moins la version perceptible par un être humain vers une passerelle de chaîne de blocs (47), la passerelle de chaîne de blocs (47) fournissant le(s) hachage(s) à une infrastructure de chaîne de blocs (46) pour la génération, sur la base de celui-ci ou ceux-ci, d'une signature S ; et
la réception de la signature S et le renvoi de la signature (S) conjointement avec la version perceptible par un être humain (M_{P}) des données sources à l'agent de transfert sécurisé de données (30s) ;
au niveau de l'agent de transfert sécurisé de données (30s),
l'envoi des données signées (M_{S}) incluant la signature (S) et la version perceptible par un être humain (M_{P}) au dispositif destinataire (14) ; et
facultativement, le fait de rendre la signature (S) accessible à un portail de signature sécurisé (42).

2. Procédé selon la revendication 1, incluant en outre le téléversement des données signées (M_{S}) vers un serveur de stockage sécurisé en nuage (51) via une première liaison chiffrée (37).

3. Procédé selon la revendication 1 ou 2, dans lequel le serveur de messagerie expéditeur (36s) est distant du dispositif expéditeur (12) et couplé à celui-ci via une seconde liaison chiffrée (38).

4. Procédé selon l'une quelconque des revendications précédentes, dans lequel l'application de données sources (28s) est une application de messagerie, et les données sources sont un message électronique.

5. Procédé selon l'une quelconque des revendications précédentes, dans lequel la version perceptible par un être humain comprend une copie prête à l'impression du message électronique.

6. Procédé selon la revendication 5, dans lequel la copie prête à l'impression est au format de document portable (PDF) ou au format PostScript (PS).

7. Procédé selon l'une quelconque des revendications 1 à 3, dans lequel l'application de données sources (28s) est une application de publication de contenu, et les données sources sont un contenu multimédia.

8. Procédé selon l'une quelconque des revendications 1 à 3, dans lequel l'application de données sources (28s) est une application de présentation multimédia ou de diffusion en direct, et les données sources sont des données d'image et/ou vidéo.

9. Procédé de traitement, au niveau d'un dispositif destinataire (14), de données signées (M'_{S}) envoyées par un dispositif expéditeur (12) à l'aide du procédé selon l'une quelconque des revendications précédentes, le dispositif destinataire (14) incluant un dispositif mémoire, des dispositifs de sortie visuelle et/ou audio et un dispositif d'entrée d'utilisateur couplés à un processeur, le processeur étant configuré pour la mise en œuvre du procédé, le procédé comprend :
la réception, au niveau d'une application de données de destinataire (28r) ou au niveau d'un serveur de destinataire en communication avec l'application de données de destinataire (28r), des données signées (M'_{S}) ;
l'extraction d'une signature (S') à partir des données signées (M'_{S}) ;
l'envoi de la signature (S') extraite à une passerelle de chaîne de blocs (47) et/ou à un portail de signature sécurisé (42) avec une requête de vérification ;
la réception d'un résultat de vérification en provenance de la passerelle de chaîne de blocs (47) ou du portail de signature sécurisé (42), le résultat de vérification indiquant si la signature (S') extraite est vérifiée ou non comme correspondant à une signature associée aux données signées et envoyée à la passerelle de chaîne de blocs (47) ou au portail de signature sécurisé (42) par le dispositif expéditeur (12) ; et
le transfert du résultat de vérification à l'application de données de destinataire (28r) ou au serveur de destinataire ;
au niveau de l'application de données de destinataire (28r) ou du serveur de destinataire,
(i) l'extraction de la version perceptible par un être humain (M'_{P}) et de la signature (S') à partir des données signées (M'_{S}),
la présentation de la version perceptible par un être humain M'p à un utilisateur via les dispositifs de sortie visuelle et/ou audio, et/ou
(ii) la présentation d'une indication en association avec les données signées M'_{S} reçues que le résultat de vérification était positif ou négatif correspondant, respectivement, au fait que la signature (S') extraite est valide ou invalide.

10. Dispositif destinataire (14) pour la réception sécurisée de données communiquées par un dispositif expéditeur (12), le dispositif destinataire (14) incluant un dispositif mémoire, des dispositifs de sortie visuelle et/ou audio et un dispositif d'entrée d'utilisateur couplés à un processeur, le processeur étant configuré pour la mise en œuvre du procédé selon la revendication 9.
